# FASCICULE DE BREVET EUROPEEN

(11) **EP 1 961 546 B1**
(45) Date de publication et mention de la délivrance du brevet: **21.12.2016**
(21) Numéro de dépôt: 08300114.9
(22) Date de dépôt: 26.02.2008
(51) Int. Cl.: B29C 45/14, B32B 7/00, B60R 13/02, B32B 7/04

(54) **Procédé de fabrication d'une pièce d'habillage intérieur pour véhicule automobile, formant accoudoir à angle droit**
Herstellungsverfahren eines Innenverkleidungsteils für Kraftfahrzeuge, für rechtwinklige Armlehne
Manufacturing method of an interior trim for vehicle, forming right-angled armrest

(30) Priorité: 26.02.2007 FR 0753503
(43) Date de publication de la demande: 27.08.2008
(73) Titulaire: EUROSTYLE SYSTEMS, 36000 Châteauroux (FR)
(72) Inventeur: Fantin, Claude, 36000 Châteauroux (FR); Tirlemont, Christophe, 36330 Le Poinconnet (FR)
(74) Mandataire: Thinat, Michel

(56) Documents cités:
- EP-A- 1 179 451
- WO-A-94/25248
- WO-A-2006/076129
- DE-A1- 19 505 155
- DE-B3- 10 218 004
- US-A- 5 304 273
- US-A- 5 401 449

## Description

La présente invention concerne un procédé de fabrication d'une pièce d'habillage intérieur pour véhicule automobile, formant accoudoir, ainsi que le moule de fabrication de cette pièce.

Le document US 5401 449 A décrit un procédé de frabrication d'une telle pièce selon le préambule de la revendication 1, ainsi qu'un moule selon le préambule de la revendication 8.

Une pièce de ce type définit une paroi latérale, une surface de repos permettant à un utilisateur du véhicule d'y poser son avant bras et une ligne de jonction de la paroi latérale avec la surface de repos.

Elle est formée par une couche de support donnant à la pièce d'habillage une rigidité particulière et une forme prédéterminée, et par une couche de revêtement couvrant la couche de support 6 et donnant à la pièce son aspect esthétique et son confort.

Sa fabrication requiert en général un procédé comprenant une étape de formation de la couche support avec une forme concave permettant de définir la surface de repos de l'accoudoir, une étape de formation de la couche de revêtement et une étape de fixation de la couche de revêtement sur la couche de support.

Lorsque l'angle défini entre la paroi latérale et la surface de repos de la pièce, est défini comme un angle droit, le revêtement se retrouve replié sur lui-même, définissant des plis disgracieux.

Pour éviter cet inconvénient, la solution-jusqu'à maintenant proposée consistait à prévoir un rayon de courbure important entre la paroi latérale et la surface de repos de la pièce, empêchant toute conception de pièces avec un angle droit.

Pour éviter le problème de plis disgracieux et permettre la définition d'un angle droit, une solution alternative préconise de constituer l'accoudoir comme une pièce rapportée ultérieurement fixée à un panneau latéral.

Cette dernière solution présente un surcoût économique non négligeable, une augmentation du temps d'assemblage de la pièce et un risque de fragmentation en cas de choc latéral.

L'invention vise à palier ces problèmes.

L'invention concerne le procédé de fabrication d'une pièce d'habillage intérieur pour véhicule automobile selon la revendication 1.

L'invention concerne également un moule selon la revendication 8.
Des modes de réalisation avantageux de l'invention sont prèsents dans les revendications indépendantes.

L'invention sera mieux comprise et d'autres buts, avantages et caractéristiques de celle-ci apparaîtront à la lecture de la description suivante, faite en référence aux figures annexées parmi lesquelles :
- la figure 1 est une vue en perspective de la couche de revêtement de la pièce d'habitacle;
- la figure 2 représente une vue en coupe transversale du revêtement de la figure 1 ;
- la figure 3 illustre une vue en coupe des parties mâle et femelle d'un moule à injection dans une position d'ouverture, entre lesquelles le revêtement de la figure 1 est positionné,
- la figure 4 est une vue analogue à la figure 3 dans une position de fermeture du moule et suite à l'injection de matière plastique à l'état fondu le long du revêtement,
- la figure 5 représente une vue similaire à la figure 4 pour une position d'ouverture du moule, lorsque la matière plastique injectée a refroidi,
- la figure 6 illustre une vue en section transversale de la pièce obtenue à l'ouverture du moule,
- la figure 7 est une vue en perspective de la pièce de la figure 6.

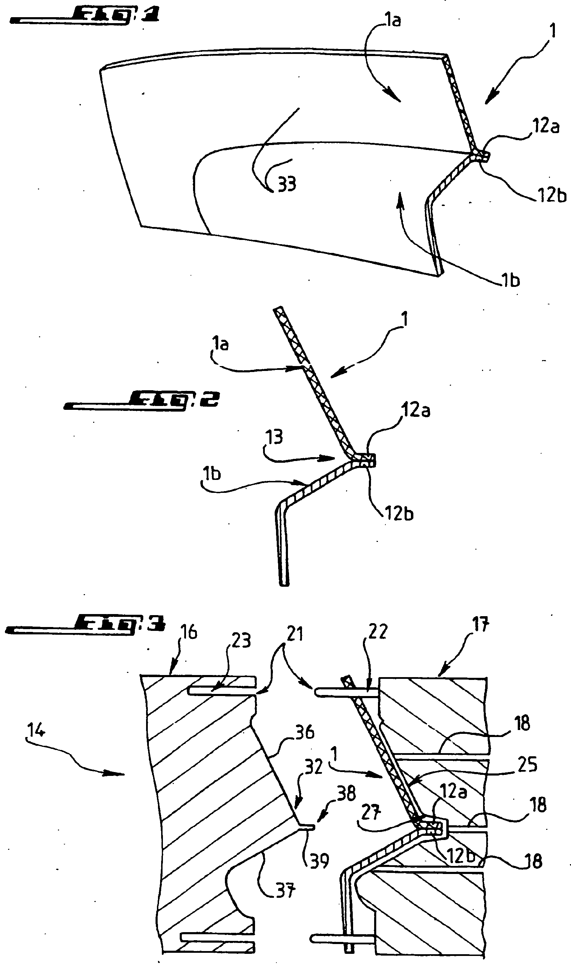

Sur la figure 1 est représentée une couche de revêtement ou revêtement 1 d'une pièce multicouche, notamment destinée à servir d'habillage intérieur pour une porte de véhicule automobile.

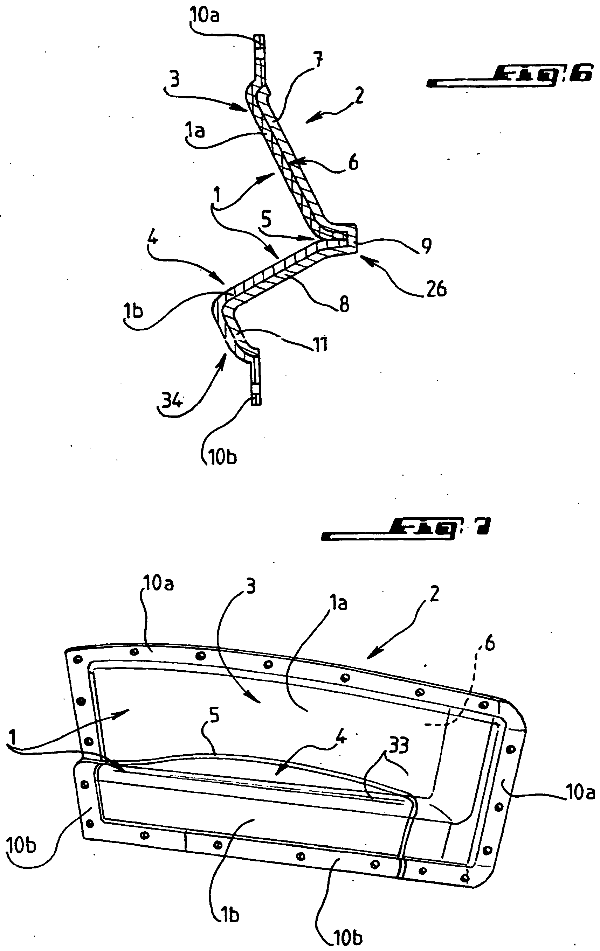

Cette pièce 2, mieux visible sur la figure 7, a pour fonction l'habillage de la face intérieure de la porte du véhicule et la définition d'une zone accoudoir pour un utilisateur du véhicule.

A cet effet, la pièce 2 présente sur sa face visible par l'utilisateur, une forme générale concave définissant en section transversale une paroi latérale 3, une surface de repos 4 permettant à un utilisateur du véhicule d'y poser son bras et s'étendant d'un côté de la paroi latérale 3 ainsi qu'une ligne de jonction 5 entre la paroi latérale 3 et la surface de repos 4.

La paroi latérale 3 et la surface de repos 4 de la pièce 2 sont sensiblement perpendiculaires l'une à l'autre afin de former une zone d'accoudoir à angle droit ou sensiblement droit.

Comme mis en évidence sur la figure 6, cette pièce d'habillage est constituée en plus du revêtement précité 1, par une couche rigide de support nommée dans la suite support 6, recouverte par le revêtement 1, fabriquée en un matériau plastique 10 apte à être mis en forme par moulage par injection, et conférant à la pièce, une fois refroidi, la forme et la rigidité.

Plus précisément, le revêtement 1 est constitue par l'assemblage de deux parties distinctes 1a, 1b de revêtements le long de la ligne de jonction 5 entre la paroi latérale 7 et la surface de repos 8 de la pièce 2.

Plus particulièrement, la première partie de revêtement 1a est destinée à définir avec le support sous-jacent 6, la paroi latérale 3 de la pièce 2, la deuxième partie 1b de revêtement étant destinée à définir avec le support 6, la surface de repos 4 de la pièce 2.

Tel que mieux visible sur la figure 7, la première partie de revêtement 1a présente des dimensions suffisantes pour couvrir la paroi supérieure 7 du support 6 et pour dépasser légèrement de ce support 6 afin de définir une bande de solidarisation 10a du revêtement à la porte du véhicule.

De même, la deuxième partie de revêtement 1b présente des dimensions suffisantes afin de couvrir la paroi de repos 8 et le rebord 11 du support 6 et de définir une bande de fixation 10b à la porte du véhicule s'étendant d'un côté du rebord 11.

La solidarisation l'une à l'autre des deux parties de revêtement s'effectue, comme visible sur la figure 2, le long d'une surface de fixation.

Afin d'assurer cette solidarisation, les deux parties de revêtement 1a, 1b, comprennent respectivement deux bordures de fixation 12a 12b fixées l'une à l'autre au moyen d'une soudure aux ultrasons/haute fréquence, d'une couture et/ou d'un adhésif, ou tout autre procédé de liaison de deux matériaux identiques ou différents.

Dans le cas d'une solidarisation par adhésif, il est avantageux, afin de conférer à la pièce de la souplesse, d'utiliser un film polyuréthane, un film de base polypropylène ou éthylène.

Une fois solidarisées l'une à l'autre, les deux parties de revêtement 1a, 1b peuvent présenter une forme tridimensionnelle proche de la forme définitive du revêtement du sein de la pièce finie 2 et définissent une ligne extérieure de jonction 13 qui formera au sein de la pièce finie la jonction 5 entre la paroi latérale 3 et la surface de repos 4.

Ainsi, au niveau de la jonction 5 de la pièce finie, les deux parties de revêtement 1a, 1b viennent se rejoindre de façon à définir en section transversale une forme de Y, permettant d'empêcher l'accumulation de matière généralement rencontrée sur une pièce dans laquelle le revêtement est formé d'une unique partie repliée sur elle-même au niveau de l'angle droit de la jonction.

Avantageusement, les deux parties constitutives du revêtement 1a, 1b peuvent être de compositions et d'épaisseur identiques, afin de donner à la pièce 2 l'apparence d'être pourvue d'un seul et même revêtement.

Au contraire, de façon à visuellement et tactilement différencier la paroi latérale 3 et la surface de repos 4 de la pièce 2, les parties 1a, 1b du revêtement pourront être de compositions et d'épaisseur différentes.

Par exemple, chaque partie de revêtement 1a, 1b pourra être choisie parmi du tissu, du velours, un revêtement polychlorure de vinyle, un revêtement en polypropylène, de type alcantara ou tout autre matière apte à assurer une fonction esthétique et/ou de confort.

Comme visible sur la figure 6, le support 6 comprend une paroi supérieure 7 destinée à former avec la première partie 1a du revêtement 1, la paroi latérale 3 de la pièce 2, une paroi de repos 8, destinée à former avec la deuxième partie 1b du revêtement 1, la surface de repos 4 de la pièce et un profilé intermédiaire 9 à section transversale en forme générale de U, assurant la liaison entre la paroi supérieure 7 et la paroi de repos 8 de la pièce 2 et enserrant les deux bordures de fixation 12a, 12b des deux parties 1a, 1b du revêtement 1.

Le support 6 comprend en outre un rebord inférieur 11 s'étendant dans le prolongement de la paroi de repos 8 et selon un plan sensiblement parallèle à la paroi supérieure 7, qui est également recouvert par la deuxième partie 1b du revêtement 1.

La fabrication de la pièce 2 à support rigide 6 et revêtement 1 en deux parties distinctes est rendue possible au moyen du moule à injection 14 illustré sur les figures 3 à 5.

Ce moule 14 comprend une partie mâle formant empreinte 16 et une partie femelle formant piston 17 pourvue de conduits d'injection 18 aptes à acheminer de la matière plastique à l'état fondu jusqu'à une surface d'injection 25.

La pression de matière plastique injectée à l'état liquide est par exemple comprise entre 50 et 250 bar.

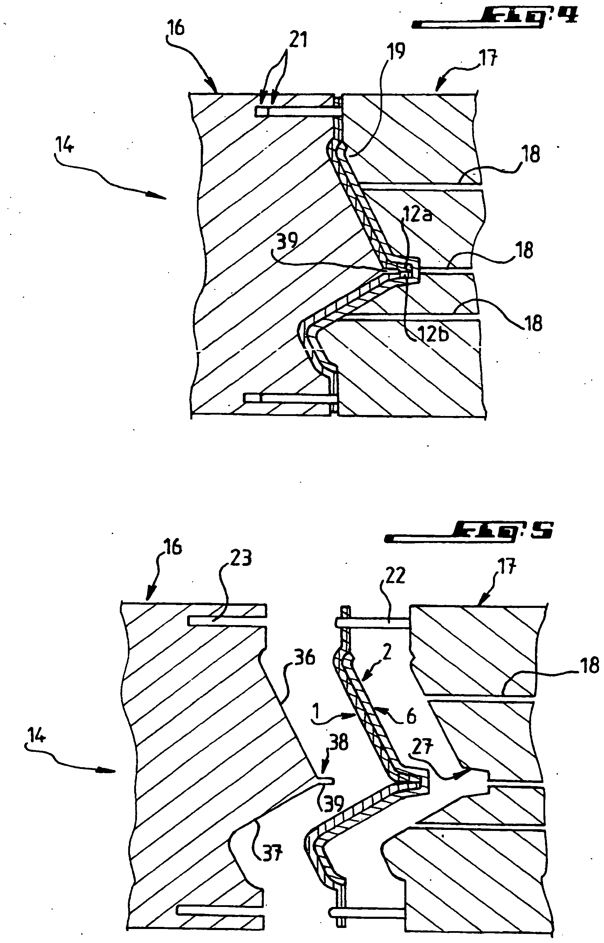

Les parties mâle et femelle 16, 17 du moule 14 sont montées mobiles en translation sur une presse horizontale d'injection ou verticale, de façon à définir une position de fermeture du moule représentée sur la figure 4, dans laquelle l'empreinte 16 forme avec le piston 17 une cavité 19 de forme générale complémentaire de la pièce à fabriquer, et les positions d'ouverture du moule des figures 3 et 5 permettant respectivement la mise en place du revêtement 1 et le retrait de la pièce une fois mise en forme 2.

Le moule 14 comprend en outre des moyens de positionnement des 2 revêtements assemblés 21, constitués de tiges de positionnement 22 solidaires du piston 17 et de canaux d'accueil 23 de ces tiges 22 formés dans l'épaisseur de l'empreinte 16 afin de conférer un positionnement supplémentaire des deux revêtements. Pour des raisons pratiques, ces moyens de positionnement peuvent être inversés entre la partie male et femelle.

Le moule 14 peut comprendre également un serre flan périphérique du revêtement 1 permettant le positionnement et le maintien de ce revêtement 1 sur le piston 17 au moment de la fermeture du moule comme solution alternative.

Ce serre flan est monté mobile par rapport au piston 17, par exemple au moyen d'un vérin non représenté, de façon à régler la distance du revêtement 1 relativement au piston 17, entre une position proche de ce dernier (figures 3 et 4), et une position d'éloignement (figure 5).

Le piston 17 comprend une partie rentrante 25 de forme complémentaire de la surface arrière 26 du support 6 de la pièce à fabriquer 2, de sorte que cette partie rentrante 25 définisse deux parois extrêmes planes destinées à mouler respectivement les faces arrières des parois supérieure 7 et de repos 8 du support 6, et une rainure d'accueil 27 définissant une forme complémentaire de la face arrière du profilé de jonction 9 du support 6.

Cette rainure 27 est destinée à recevoir les bordures solidarisées 12a, 12b des deux parties de revêtement 1 avant injection de la matière plastique constitutive du support, comme détaillé ultérieurement.

L'empreinte 16 définit une partie proéminente 32 de forme complémentaire de la surface apparente 33 de la pièce à fabriquer, à savoir complémentaire des surfaces apparentes de la paroi latérale 3, de la surface de repos 4 et de la partie de renfort 34 de cette pièce 2.

Ainsi, l'empreinte 16 définit deux panneaux 36, 37 sensiblement perpendiculaires l'un de l'autre, définissant eux-mêmes une jonction 38.

Selon l'invention, une lame 39 fait saillie de la jonction 38 des deux panneaux 36, 37 de l'empreinte 16, cette lame 39 étant destinée à être insérée entre les deux bordures 12a, 12b des parties distinctes de revêtement 1a, 1b lors de la fermeture du moule 14.

Le moule ci-dessus décrit est utilisé dans le cadre du procédé dé fabrication de la pièce d'habillage selon l'invention comprenant:
- une étape (a) de formation du revêtement 1 par solidarisation l'une à l'autre des bordures de fixation 12a, 12b des deux parties distinctes 12a, 12b sur une surface de liaison (figure 2), suite à laquelle les deux parties 1a, 1b solidarisées l'une à l'autre définissent une forme tridimensionnelle identique ou proche de la forme tridimensionnelle des deux parties de revêtement au sein de la pièce finie. Plus précisément, cette étape de mise en forme tridimensionnelle des deux parties distinctes 12a, 12b de revêtement lors de leur solidarisation l'une à l'autre, nécessite que les deux parties de revêtement 12a, 12b présentent une certaine rigidité ou raideur leur permettant de conserver une forme non plane sous une contrainte. Et cette contrainte est exercée par la ligne ou surface de jonction entre les deux parties de revêtement 12a, 12b. La largeur de la surface de jonction est comprise de préférence entre 2 et 10 mm.

Un type de revêtement convenant pour la réalisation de cette étape est un revêtement de type chaîne-trame, ou un revêtement enduit d'un film plastique semi-rigide, tel qu'un textile enduit plastifié, connu sous l'acronyme TEP.

Dans l'exemple représenté sur les figures 1 et 2, la forme tridimensionnelle particulière de la partie basse de revêtement 1b est obtenue grâce à la raideur de ce revêtement 1b et à la courbure de la ligne de jonction.

Cette solidarisation particulière permet de positionner dès le départ les parties de revêtement dans leur configuration définitive au sein de la pièce finie ou proche de leur configuration définitive, ce qui permet de mieux les positionner par rapport à la forme proéminente du moule de forme complémentaire de la face visible de la pièce finie, par rapport à la lame 39 de l'empreinte et vis-à-vis de la rainure du piston,
- une étape optionnelle de collage d'un pavé de mousse sur la face arrière de la partie de revêtement 1b destinée à former la surface de repos 4 de la pièce 2, ce pavé étant destiné à être interposée entre le revêtement 1 et le support 6 au sein de la pièce 2,
- une étape d'introduction (b) des deux parties de revêtement 1a, 1b assemblés entre l'empreinte 16 et le piston 17 du moule 14, le revêtement 1 étant maintenu à distance de la surface d'injection de l'empreinte par les moyens prévus à cet effet (figure 4).

Selon le mode de réalisation représenté, le revêtement constitué de deux parties solidarisées l'une à l'autre 1a, 1b, est fixé sur le piston 17 du moule, les deux bordures de fixation 12a, 12b des deux parties de revêtement 1a, 1b venant se loger dans la rainure 27 de ce piston 17, qui forment également des moyens de guidage de la fermeture du moule, avec les canaux d'accueil 23 formés dans l'empreinte 16.

Selon un mode de réalisation non illustré, le revêtement est fixé.sur l'empreinte 16 du moule, la lame 39 de la partie proéminente 32 de l'empreinte 16 venant s'insérer entre les deux bordures de fixation 12a, 12b de deux parties de revêtement 1a, 1b. Bien entendu dans ce cas, les broches 22 sont solidaires de l'empreinte 16 et les canaux d'accueil 23 sont formés dans le piston 17.
- une étape de fermeture du moule (c) au cours de laquelle la lame 39 vient s'insérer entre les bordures de fixation 12a, 12b des deux parties 1a, 1b du revêtement 1 et repousse en conséquence de la surface apparente du revêtement 1, le matériau de liaison servant à la solidarisation de ces bordures 12a, 12b,

Le piston 16, l'empreinte 17 et le revêtement 1 définissent alors ensemble un espace libre d'injection destiné à être comblé par la matière plastique constitutive du support 6, lors de l'injection,
- une étape d'injection (d) de la matière plastique à l'état liquide dans l'espace d'injection, le long de la face arrière du revêtement 1, au moyen des conduits d'injection 18,

La pression d'injection pousse le revêtement 1 contre les panneaux 36, 37 de l'empreinte 16 et plus particulièrement les bordures de fixation 12a, 12b de ce revêtement 1 contre la lame 39 du piston 17.

En conséquence, des contraintes s'accumulent au sein de la matière plastique entourant les bordures de fixation 12a, 12b du revêtement 1 qui tendent à comprimer ces bordures 12a, 12b contre la lame 39,

Avantageusement, durant cette étape d'injection (d), les deux parties de revêtement peuvent être tirées dans des directions opposées, afin de diminuer encore, voire annuler, la formation de repli.

La partie supérieure de revêtement 1a est étirée par son bord libre supérieur avec une force de traction dirigée vers le haut, la partie inférieure de revêtement 1b étant étirée par son bord inférieur libre vers le bas.
- une étape de refroidissement (e) de l'ensemble formé par la matière plastique injectée et le revêtement 1,
- une étape d'ouverture du moule et d'extraction (f) de la pièce 2,

L'effet du retrait de la lame 39 combiné à l'effet des contraintes de compression accumulées dans le matériau plastique autour des bordures 12a, 12b, provoque le rapprochement l'une de l'autre des bordures de fixation 12a, 12b dans l'espace laissé libre par le retrait de la lame 39 de l'empreinte.

Le dispositif et le procédé décrits ci-dessus offrent différents avantages, parmi lesquels :
L'obtention d'un angle droit au niveau de la zone accoudoir, et dépourvu de pli,
Le fait de masquer le matériau de solidarisation des deux parties de revêtement grâce à la conception du moule à injection avec lame d'insertion 39,
L'utilisation de revêtements de structures et/ou d'épaisseurs différentes, de façon à proposer un toucher, un confort et/ou un aspect différents entre la paroi latérale et la zone de repos de l'accoudoir,
La fabrication de la pièce d'habillage au moyen d'un unique outil de moulage.

## Revendications

1. Procédé de fabrication d'une pièce d'habillage intérieur (2) pour véhicule automobile, formant accoudoir, définissant une paroi latérale (3), une surface de repos (4) permettant à un utilisateur du véhicule d'y poser son avant bras, une ligne de jonction (5) de la paroi latérale (3) avec la surface de repos (4), la paroi latérale (3) et la surface de repos (4) définissant un angle droit d'accoudoir, la pièce d'habillage (2) étant formée par une couche de support (6) donnant à la pièce d'habillage (2) une forme prédéterminée et une couche de revêtement (1) donnant à la pièce (2) son aspect et qui est réalisée en deux parties distinctes (1a, 1b) l'une de l'autre et ayant chacune une bordure de fixation (12a, 12b) le procédé étant mis en oeuvre avec un moule d'injection comprenant deux parties mobiles mâle (16) et femelle (17) de formes complémentaires, la partie mâle (16) présentant une surface externe définissant la forme négative de la surface visible du revêtement (1) de la pièce (2) et étant pourvue d'une lame (39) faisant saillie de ladite surface externe et étant destinée à être insérée entre les deux bordures de fixation (12a, 12b) des deux parties distinctes (1a, 1b) lors de la fermeture du moule, la partie femelle (17) comprenant des canaux d'injection de matière plastique, et le procédé comprenant les étapes successives de solidarisation l'une à l'autre des deux parties distinctes (1a, 1b) de revêtement par les deux bordures de fixation (12a, 12b) le long d'une ligne extérieure de jonction (13), d'introduction des deux parties solidarisées au sein du moule, d'injection de matière plastique, pour former la couche de support (6) le long de la surface destinée à être non visible des deux parties (1a, 1b) de la couche de revêtement (1), **caractérisé en ce que**, une fois les deux parties distinctes (1a, 1b) du revêtement (1) solidarisées l'une à l'autre, les deux parties présentent une forme tridimensionnelle proche de la forme définitive du revêtement au sein de la pièce finie (2) et définissent la ligne extérieure de jonction (13) qui formera au sein de la pièce finie (2) la jonction (5) entre la paroi latérale (3) et la surface de repos (4), ces deux parties (1a, 1b) étant introduites avec cette forme tridimensionnelle entre les deux parties mâle (16) et femelle (15) du moule.

2. Procédé selon la revendication 1, **caractérisé en ce que** pour doter les deux parties distinctes (1a, 1b) de revêtement une fois solidarisées l'une à l'autre par les bordures de fixation (12a, 12b) des deux parties distinctes (1a, 1b) sur une surface de liaison, d'une forme tridimensionnelle proche de la forme définitive du revêtement (1) au sein de la pièce finie (2), ces deux parties de revêtement (1a, 1b) sont choisies comme présentant une certaine rigidité ou raideur leur permettant de conserver une forme non plane sous une contrainte, cette contrainte étant exercée par la ligne ou surface de jonction entre les deux parties de revêtement (1a, 1b).

3. Procédé selon la revendication 2, **caractérisé en ce que** la contrainte permettant aux deux parties de revêtement (12a, 12b) de conserver la forme tridimensionnelle est exercée par un agent de solidarisation des deux parties distinctes appliqué le long des bordures de fixation de ces parties (12a, 12b).

4. Procédé selon la revendication 3, **caractérisé en ce que** l'agent de solidarisation est un moyen de soudure à chaud, des ultra-sons haute fréquence, une couture, ou un adhésif.

5. Procédé selon la revendication 4, **caractérisé en ce que** la solidarisation par un adhésif est effectuée avec un adhésif souple, tel qu'un film de polyuréthane ou un film de base propylène ou éthylène.

6. Procédé selon l'une des revendications 3 à 5, **caractérisé en ce qu'**il comprend une étape de repoussement de l'agent de solidarisation par rapport à la face avant du revêtement.

7. Procédé selon la revendication 6, **caractérisé en ce que** l'étape de repoussement de l'agent de solidarisation est préalable à l'étape d'injection de matière plastique.

8. Moule de mise en oeuvre du procédé selon la revendication 3 comprenant à cet effet deux parties mobiles l'une par rapport à l'autre, mâle (16) et femelle (17), et de formes complémentaires, la partie mâle (16) comprenant une forme proéminente de forme complémentaire de l'angle d'accoudoir de la pièce, et destinée à s'appliquer dans cet angle, **caractérisé en ce que** la partie mâle (16) comprend une lame faisant saillie (39) de la forme proéminente formant l'angle de l'accoudoir et destinée à venir, lors du rapprochement l'une de l'autre des parties mâle (16) et femelle (17), s'insérer entre les bordures de fixation (12a, 12b) des deux parties de revêtement (1a, 1b) et à repousser de la face avant du revêtement (1) l'agent de solidarisation.

9. Moule selon la revendication 8, **caractérisé en ce que** la partie femelle (17) comprend une rainure d'accueil (27) de la face arrière des bordures de fixation (12a, 12b) solidarisées l'une à l'autre des deux parties de revêtement (1a, 1b), disposée en regard de la lame (38) de la partie mâle (14).

## Patentansprüche

1. Verfahren zur Herstellung eines Innenverkleidungsteils (2) für ein Kraftfahrzeug, das eine Armlehne bildet, definierend eine Seitenwand (3), eine Ruhefläche (4), die es einem Benutzer des Fahrzeugs erlaubt, dort seinen Unterarm abzulegen, eine Verbindungslinie (5) der Seitenwand (3) mit der Ruhefläche (4), wobei die Seitenwand (3) und die Ruhefläche (4) einen rechten Armlehnenwinkel definieren, wobei das Verkleidungsteil (2) von einer Trägerschicht (6) gebildet ist, die dem Verkleidungsteil (2) eine vorbestimmte Form verleiht, und von einer Bezugsschicht (1), die dem Teil (2) sein Aussehen gibt und die aus zwei Teilen (1a, 1b) hergestellt ist, die sich voneinander unterscheiden und jeweils einen Befestigungsrand (12a, 12b) haben, wobei das Verfahren mit einer Spritzgussform umgesetzt wird, die zwei bewegliche Teile, ein männliches (16) und ein weibliches (17), komplementärer Formen umfasst, wobei das männliche Teil (16) eine Außenfläche aufweist, die die negative Form der sichtbaren Fläche des Bezugs (1) des Teils (2) definiert und mit einer Lasche (39) ausgestattet ist, die aus der Außenfläche herausragt und bestimmt ist, zwischen die zwei Befestigungsränder (12a, 12b) der beiden unterschiedlichen Teile (1a, 1b) beim Schließen der Form eingesetzt zu werden, wobei der weibliche Teil (17) Kunststoffmaterialeinspritzkanäle umfasst, und das Verfahren die aufeinanderfolgenden Schritte der Verbindung aneinander der zwei unterschiedlichen Bezugsteile (1a, 1b) mittels der zwei Befestigungsränder (12a, 12b) entlang einer äußeren Verbindungslinie (13), des Einsetzens der zwei verbundenen Teile in die Form, des Einspritzens von Kunststoffmaterial, um die Trägerschicht (6) entlang der Fläche, die bestimmt ist, nicht sichtbar zu sein, von den zwei Teilen (1a, 1b) der Bezugsschicht (1), **dadurch gekennzeichnet, dass**, sobald die zwei unterschiedlichen Teile (1a, 1b) des Bezugs (1), miteinander verbunden sind, die zwei Teile eine dreidimensionale Form aufweisen, die der endgültigen Form des Bezugs im Rahmen des Fertigteils (2) ähnelt und die äußere Verbindungslinie (13) definieren, die im Rahmen des Fertigteils (2) die Verbindung (5) zwischen der Seitenwand (3) und der Ruhefläche (4) bildet, wobei diese beiden Teile (1a, 1b) mit dieser dreidimensionalen Form zwischen die beiden Teile der Form, des männlichen (16) und des weiblichen (15), eingesetzt werden.

2. Verfahren nach Anspruch 1, **dadurch gekennzeichnet, dass**, um die einmal miteinander mittels der Befestigungsränder (12a, 12b) der zwei unterschiedlichen Teile (1a, 1b) auf einer Verbindungsfläche verbundenen zwei unterschiedlichen Bezugsteile (1a, 1b) mit einer dreidimensionalen Form, die der endgültigen Form des Bezugs (1) im Rahmen des Fertigteils (2) ähnelt, auszustatten, diese zwei Bezugsteile (1a, 1b) derart ausgewählt sind, dass sie eine gewisse Steifheit oder Starrheit aufweisen, die es ihnen erlaubt, unter einer Beanspruchung eine nicht ebene Form zu behalten, wobei diese Beanspruchung von der Verbindungslinie oder -fläche zwischen den zwei Bezugsteilen (1a, 1b) ausgeübt wird.

3. Verfahren nach Anspruch 2, **dadurch gekennzeichnet, dass** die Beanspruchung, die es den beiden Bezugsteilen (12a, 12b) erlaubt, die dreidimensionale Form zu behalten, von einem Verbindungsmittel der beiden unterschiedlichen Teile ausgeübt wird, das entlang der Befestigungsränder dieser Teile (12a, 12b) ausgeübt wird.

4. Verfahren nach Anspruch 3, **dadurch gekennzeichnet, dass** das Verbindungsmittel ein Warmschweißmittel, mit Ultraschall-Hochfrequenz, eine Naht oder ein Haftmittel ist.

5. Verfahren nach Anspruch 4, **dadurch gekennzeichnet, dass** die Verbindung durch ein Haftmittel mit einem biegsamen Haftmittel, wie ein Polyurethanfilm oder ein Film auf der Basis von Propylen oder Ethylen durchgeführt wird.

6. Verfahren nach einem der Ansprüche 3 bis 5, **dadurch gekennzeichnet, dass** es einen Abstoßschritt des Verbindungsmittels in Bezug auf die Vorderseite des Bezugs umfasst.

7. Verfahren nach Anspruch 6, **dadurch gekennzeichnet, dass** der Abstoßschritt des Verbindungsmittels vor dem Einspritzschritt des Kunststoffs erfolgt.

8. Form für die Ausführung des Verfahrens nach Anspruch 3, umfassend zu diesem Zweck zwei zueinander bewegliche und komplementär geformte Teile, ein männliches (16) und ein weibliches (17), wobei der männliche Teil (16) eine auskragende Form komplementärer Form zum Armstützenwinkel des Teils hat und bestimmt ist, an diesem Winkel anzuliegen, **dadurch gekennzeichnet, dass** der männliche Teil (16) eine Lasche umfasst, die aus der auskragenden Form, die den Armstützenwinkel bildet, hervorsteht (39) und bestimmt ist, sich bei der Annäherung aneinander des männlichen Teils (16) und weiblichen Teils (17) zwischen den Befestigungsrändern (12a, 12b) der beiden Bezugsteile (1a, 1b) einzusetzen und das Verbindungsmittel von der Vorderseite des Bezugs (1) abzustoßen.

9. Form nach Anspruch 8, **dadurch gekennzeichnet, dass** der weibliche Teil (17) eine Empfangsrille (27) der Rückseite der miteinander verbundenen Befestigungsränder der zwei Bezugsteile (1a, 1b) umfasst, die gegenüber der Lasche (38) des männlichen Teils (14) angeordnet ist.

## Claims

1. A method for manufacturing an inner trim (2) for a motor vehicle, forming an armrest, defining a side wall (3), a rest surface (4) allowing a user of the vehicle to place his forearm there, a junction line (5) of the side wall (3) with the rest surface (4), the side wall (3) and the rest surface (4) defining a right-angled armrest, the trim (2) being formed by a support layer (6) giving the trim (2) a predetermined shape, and a cover layer (1) giving the part (2) its appearance and that is made in two separate parts (1a, 1b) and each having a fastening border (12a, 12b), the method being implemented with an injection mold comprising two male (16) and female (17) moving parts with complementary shapes, the male part (16) having an outer surface defining the negative shape of the visible surface of the covering (1) of the part (2) and being provided with a blade (39) protruding from said outer surface and being intended to be inserted between the two fastening borders (12a, 12b) of the two separate parts (1a, 1b) during closing of the mold, the female part (17) comprising plastic injection channels, and the method comprising the successive steps of securing two separate covering parts (1a, 1b) by the two fastening borders (12a, 12b) along an outer junction line (13), inserting the two secured parts within the mold, injecting plastic to form the support layer (6) along the surface intended to non visible of the two parts (1a, 1b) of the cover layer (1), **characterized in that**, once the two separate parts (1a, 1b) of the covering (1) are secured to one another, the two parts have a three-dimensional shape close to the final shape of the covering within the finished part (2) and defining the outer junction line (13), which will form, within the finished part (2), the junction (5) between the side wall (3) and the rest surface (4), these two parts (1a, 1b) being introduced with this three-dimensional shape between the two male (16) and female (15) parts of the mold.

2. The method according to claim 1, **characterized in that** to equip the two separate parts (1a, 1b) of a covering once they are secured to one another by the fastening borders (12a, 12b) of the two separate parts (1a, 1b) on a connecting surface, with a three-dimensional shape close to the final shape of the covering (1) within the finished part (2), these two covering parts (1a, 1b) are chosen as having a certain rigidity or stiffness allowing them to keep a non-planar shape under a stress, this stress being exerted by the junction line or surface between the two covering parts (1a, 1b).

3. The method according to claim 2, **characterized in that** the stress allowing the two covering parts (12a, 12b) to retain the three-dimensional shape is exerted by a securing agent of the two separate parts applied along the fastening borders of these parts (12a, 12b).

4. The method according to claim 3, **characterized in that** the securing agent is a hot welding means, high-frequency ultrasound means, a seam, or an adhesive.

5. The method according to claim 4, **characterized in that** the securing by an adhesive is done with a flexible adhesive, such as a polyurethane film or a propylene- or ethylene-based film.

6. The method according to one of claims 3 to 5, **characterized in that** it comprises a step for pushing the securing agent back relative to the front face of the covering.

7. The method according to claim 6, **characterized in that** the step for pushing back the securing agent is prior to the plastic injection step.

8. A mold for carrying out the method according to claim 3, to that end comprising two moving parts relative to one another, male (16) and female (17), and with complementary shapes, the male part (16) comprising an extension with a shape complementary to the armrest angle of the part, and intended to be pressed in that angle, **characterized in that** the male part (16) comprises a blade (39) protruding from the extension forming the angle of the armrest and intended, when the male (16) and female (17) parts come closer to one another, to be inserted between the fastening borders (12a, 12b) of the two cover parts (1a, 1b) and to push back the securing agent from the front face of the covering (1).

9. The mold according to claim 8, **characterized in that** the female part (17) comprises a receiving slot (27) for the rear face of the fastening borders (12a, 12b) secured to one another of the two cover parts (1a, 1b), arranged across from the blade (38) of the male part (14).
